# EUROPÄISCHE PATENTSCHRIFT

(11) **EP 3 519 145 B1**
(45) Veröffentlichungstag und Bekanntmachung des Hinweises auf die Patenterteilung: **28.06.2023**
(21) Anmeldenummer: 17767740.8
(22) Anmeldetag: 29.08.2017
(51) Int. Cl.: B25J 15/06, B65G 47/91

(54) **GREIFVORRICHTUNG MIT EINER BERNOULLI-GREIFEINHEIT UND EINER VAKUUM-GREIFEINHEIT**
GRIPPING DEVICE WITH A BERNOULLI CHUCK AND A VACUUM CHUCK
DISPOSITIF DE PRÉHENSION COMPRENANT UNE UNITÉ DE PRÉHENSION DE TYPE BERNOULLI ET UNE UNITÉ DE PRÉHENSION À VIDE

(30) Priorität: 28.09.2016 DE 102016011616
(43) Veröffentlichungstag der Anmeldung: 07.08.2019
(73) Patentinhaber: Broetje-Automation GmbH, 26180 Rastede (DE)
(72) Erfinder: QUAST, Sascha, 26135 Oldenburg (DE); REINHOLD, Raphael, 26409 Wittmund (DE)
(74) Vertreter: Gottschald Patentanwälte Partnerschaft mbB
(86) Internationale Anmeldenummer: PCT/EP2017/071632
(87) Internationale Veröffentlichungsnummer: WO 2018/059857

(56) Entgegenhaltungen:
- EP-A2- 1 473 764
- CH-A1- 706 362
- JP-A- S5 948 938
- US-A- 4 566 726
- US-A- 4 735 449
- US-A1- 2010 296 903

## Beschreibung

Die Erfindung betrifft eine Greifvorrichtung für einen Endeffektor eines Manipulators gemäß Anspruch 1, einen Endeffektor für einen Manipulator gemäß Anspruch 11 sowie einen Manipulator gemäß Anspruch 14.

Verschiedene Arten von Greifvorrichtungen für Endeffektoren von Manipulatoren sind aus dem Stand der Technik bekannt. Beispielsweise ist aus der JP S 59-48938 eine Greifvorrichtung mit einer Bernoulli-Greifeinheit und einer Vakuum-Greifeinheit bekannt. Aus der CH 706 362 A1 ist ferner eine Greifvorrichtung bekannt, welche wahlweise als Vakuumsauger oder als Bemoullisauger betrieben werden kann.

Vakuum-Greifvorrichtungen weisen in der Regel eine Ansaugkammer auf, in welcher ein statischer Unterdruck zum Halten des Werkstückes erzeugt wird. Der Unterdruck kann nach dem Venturi-Prinzip oder mittels einer Unterdruckquelle erzeugt werden. Vakuum-Greifvorrichtungen halten das Werkstück zumeist fest. Es ist dann während des Haltens nicht gegenüber der Greifvorrichtung verschieblich.

Darüber hinaus und unabhängig hiervon sind sogenannte Bernoulli-Greifvorrichtungen bekannt, die eine Strömung zwischen Greifvorrichtung und Werkstück in der Art erzeugen, dass ein Unterdruck zum Halten des Werkstückes zwischen der Bernoulli-Greifvorrichtung und dem Werkstück erzeugt wird. Dieser Unterdruck wird nur so lange gehalten, wie die Strömung besteht, wodurch zum Halten relativ viel Energie benötigt wird, da die Strömung durchgehend aufrechterhalten werden muss. Ferner können Bernoulli-Greifvorrichtungen Werkstücke zumeist schwimmend halten. Die Werkstücke können dann während des Haltens gegenüber der Greifvorrichtung verschoben werden.

Zudem sind Endeffektoren bekannt, bei denen sowohl Bernoulli-Greifvorrichtungen als auch Vakuum-Greifvorrichtungen nebeneinander vorgesehen sind, welche zeitgleich betrieben werden.

Der Erfindung liegt die Aufgabe zugrunde, eine sichere, kompakte und kostengünstig zu betreibende Greifvorrichtung bereitzustellen, welche flexibel auch für Werkstücke unterschiedlicher Größen einsetzbar ist.

Gelöst wird die obige Aufgabe durch eine Greifvorrichtung mit den Merkmalen von Anspruch 1.

Durch das Vorsehen einer Bemoulli-Greifeinheit, welche eine Ausströmeinheit zum Ausleiten einer Strömung aus der Bernoulli-Greifeinheit zwischen die Greifvorrichtung und das Werkstück in der Art aufweist, dass durch die Strömung in einem begrenzten Bereich - Bernoulli-Unterdruck-Bereich - auf der Greiffläche ein statischer Unterdruck zum Halten des Werkstückes erzeugbar ist, kann das Werkstück nach Art einer Bernoulli-Greifeinheit gehalten werden.

Durch das Vorsehen einer Vakuum-Greifeinheit, welche eine Ansaugkammer aufweist, wobei in einem von der Ansaugammer begrenzten Bereich - Vakuum-Unterdruck-Bereich - ein statischer Unterdruck zum Halten des Werkstücks erzeugbar ist, kann ein Werkstück besonders energiesparend gehalten werden.

Erfindungsgemäß wird die Ansaugkammer durch einen Balgsaugkörper gebildet.

Um eine möglichst kompakte und flexible Greifvorrichtung zu schaffen, ist es erfindungsgemäß weiter vorgesehen, dass sich der Bernoulli-Unterdruck-Bereich und der Vakuum-Unterdruck-Bereich zumindest teilweise überschneiden oder dass der Bernoulli-Unterdruck-Bereich und der Vakuum-Unterdruck-Bereich einander umgeben. Hierdurch können auch unterschiedlich große Werkstücke besonders flexibel gehandhabt werden. Es kommt hier nämlich nicht auf einen Rasterabstand der Greifvorrichtungen unterschiedlichen Typs an, da die vorschlagsgemäße Greifvorrichtung beide Funktionsprinzipien in sich vereint.

Erfindungsgemäß weist die Vakuum-Greifeinheit eine Unterdruckleitung zum Anlegen eines Unterdrucks an die Ansaugkammer auf. Die Bernoulli-Greifeinheit weist eine Druckleitung zum Anlegen der Druckluft an die Ausströmeinheit auf. Die Mittelachsen der Unterdruckleitung und der Druckleitung verlaufen zumindest abschnittsweise koaxial.

Vorliegend wird das Werkstück über seine Werkstückoberfläche gegriffen. Das zu greifende Werkstück kann zumindest teilweise aus einem formstabilen oder aus einem biegeschlaffen Material bestehen. Insbesondere kann es sich bei den zu greifenden Werkstücken um Aluminiumbleche bzw. Aluminiumfolien und/oder Fasermaterialien, insbesondere Fasermatten handeln. Grundsätzlich können die zu greifenden Werkstücke Strukturbauteile, insbesondere Flugzeugstrukturbauteile, oder Halbfertigteile für solche Strukturbauteile sein.

In einer Weiterbildung der Erfindung gemäß Anspruch 2 wird vorgeschlagen, dass der Bernoulli-Unterdruck-Bereich vollständig im Vakuum-Unterdruck-Bereich angeordnet ist, und/oder dass der Vakuum-Unterdruck-Bereich vollständig im Bernoulli-Unterdruck-Bereich angeordnet ist.

Vorzugsweise ist es so, dass die Bernoulli-Greifeinheit zumindest zum Teil, vorzugsweise vollständig, in der Vakuum-Greifeinheit angeordnet ist (Anspruch 3). Weiter vorzugsweise ist die Bernoulli-Greifeinheit zumindest zum Teil, vorzugsweise vollständig, in der Ansaugkammer angeordnet. Dies ermöglicht ein besonders kompaktes Design und gleichzeitig einen großen Vakuum-Unterdruck-Bereich.

Gemäß Anspruch 4 erlaubt die Bernoulli-Greifeinheit ein schwimmendes Halten des flächigen Werkstücks mit einem Bewegungsfreiheitsgrad des Werkstücks entlang der Werkstückoberfläche. Hierdurch ist ein Ausgleich insbesondere beim Verformen des Werkstücks durch den Endeffektor möglich. Die Vakuum-Greifeinheit erlaubt dagegen ein festes Halten des Werkstücks ohne Bewegungsfreiheitsgrad des Werkstücks entlang der Werkstückoberfläche.

Gemäß Anspruch 5 weist die Greifvorrichtung einen Bemoulli-Betriebsmodus auf, in dem das Werkstück von der Bernoulli-Greifeinheit gehalten wird. Ferner ist ein Vakuum-Betriebsmodus vorgesehen, in dem das Werkstück bedarfsweise von der Vakuum-Greifeinheit gehalten wird. Darüber hinaus kann die Greifvorrichtung grundsätzlich einen kombinierten Betriebsmodus aufweisen, in dem das Werkstück von der Bernoulli-Greifeinheit und von der Vakuum-Greifeinheit gehalten wird.

In den Ansprüchen 7 bis 9 sind vorteilhafte konstruktive Ausgestaltungen der Vakuum-Greifeinheit und der Bernoulli-Greifeinheit beschrieben.

In einer Weiterbildung gemäß Anspruch 10 wird vorgeschlagen, dass die Greifvorrichtung eine vormontierte Einheit ausbildet und als Einheit an einem Endeffektor montierbar ist. Hierdurch ist ein besonders einfaches Austauschen der Greifvorrichtung am Endeffektor möglich.

Die eingangs beschriebene Aufgabe wird ferner durch einen Endeffektor mit den Merkmalen von Anspruch 11 gelöst.

Es ergeben sich die gleichen Vorteile wie zuvor bereits schon in Zusammenhang mit der Greifvorrichtung beschrieben. Insofern darf auf die vorstehenden Ausführungen verwiesen werden.

Hier und vorzugsweise weist der Endeffektor mindestens zwei Greifvorrichtungen auf. Dabei kann nach einer ersten Alternative von Anspruch 12 nur ein Teil der Greifvorrichtung in der zuvor beschriebenen Art ausgestaltet sein. Nach einer zweiten Alternative von Anspruch 12 können auch alle Greifvorrichtungen in der zuvor beschriebenen Art ausgebildet sein.

Zudem wird die eingangs beschriebene Aufgabe durch einen Manipulator mit dem Merkmal von Anspruch 13 gelöst. Der Manipulator ist hier mit mindestens drei Achsen ausgestattet, die der Positionierung des obigen Endeffektors dienen.

Es ergeben sich die gleichen Vorteile, wie vorstehend in Zusammenhang mit der Greifvorrichtung und/oder in Zusammenhang mit dem Endeffektor beschrieben.

Vorzugsweise weist der Manipulator gemäß Anspruch 14 eine schaltbare Ventilvorrichtung zum insbesondere pneumatischen Anschluss der Greifvorrichtung bzw. mindestens einer der Greifvorrichtungen an eine, insbesondere pneumatische, Versorgungsquelle auf. Dabei kann es sich bei der Versorgungsquelle insbesondere um eine Druckquelle und/oder eine Unterdruckquelle handeln. Hier und vorzugsweise sind mehrere Greifvorrichtungen mittels der Ventilvorrichtung in einer Gruppe an die Versorgungsquelle anschließbar und/oder angeschlossen.

Im Folgenden wird die Erfindung anhand einer lediglich Ausführungsbeispiele darstellenden Zeichnung näher erläutert. In der Zeichnung zeigt
- Fig. 1: eine vorschlagsgemäße Greifvorrichtung für einen vorschlagsgemäßen Endeffektor an einem vorschlagsgemäßen Manipulator,
- Fig. 2: einen vorschlagsgemäßen Endeffektor mit mehreren vorschlagsgemäßen Greifvorrichtungen, wobei die Greifvorrichtung in a) und in b) in unterschiedlichen Gruppen zusammengefasst sind,
- Fig. 3: einen Schnitt durch ein erstes Ausführungsbeispiel einer vorschlagsgemäßen Greifvorrichtung gemäß der Ansicht III aus Fig. 1,
- Fig. 4: eine vorschlagsgemäße Greifvorrichtung im Bemoulli-Betriebsmodus,
- Fig. 5: eine vorschlagsgemäße Greifvorrichtung im Vakuum-Betriebsmodus.

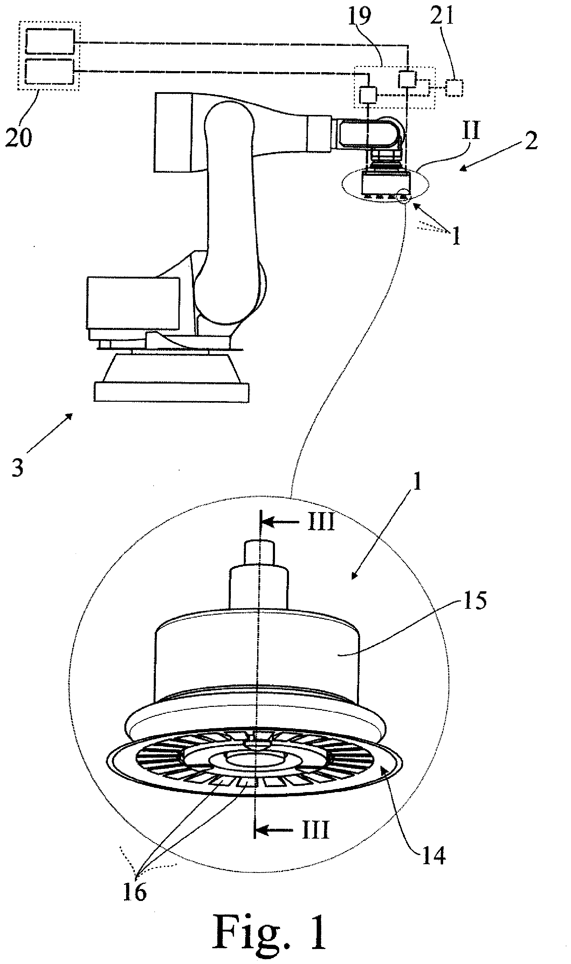

In Fig. 1 ist eine Greifvorrichtung 1 für einen Endeffektor 2 eines Manipulators 3 zur Handhabung eines Werkstücks 4 über seine Werkstückoberfläche 5 gezeigt.

Mit der vorschlagsgemäßen Greifvorrichtung 1 lässt sich grundsätzlich jedes Werkstück 4 handhaben, welches über dessen Werkstückoberfläche 5 mittels eines statischen Unterdrucks greifbar ist. Bei dem Werkstück 4 kann es sich um jedwedes Werkstück handeln, das über eine entsprechende Werkstückoberfläche 5 verfügt.

Mit der Greifvorrichtung 1 können formstabile oder auch biegeschlaffe Werkstücke 4 gehalten werden. Diese biegeschlaffen Materialien können insbesondere Aluminiumbleche bzw. Aluminiumfolien und/oder Fasermaterialien, insbesondere Fasermatten, sein. Bei den Fasermaterialien kann es sich um trockene Fasermaterialien und/oder um vorimprägnierte Fasermaterialien handeln.

Vorschlagsgemäß weist die Greifvorrichtung 1 eine Bernoulli-Greifeinheit 6 auf. Die Bernoulli-Greifeinheit 6 weist eine Ausströmeinheit 7 zum Ausleiten einer Strömung aus der Bernoulli-Greifeinheit 6 zwischen Greifvorrichtung 1 und der Werkstückoberfläche 5 in der Art auf, dass durch die Strömung in einem Bereich - Bernoulli-Unterdruckbereich 8 - über der Werkstückoberfläche 5 ein statischer Unterdruck zum Halten des Werkstücks 4 erzeugbar ist. Die Strömung weist zusätzlich zu dem statischen Druckanteil einen dynamischen Druckanteil auf. Diesbezüglich wird auf die Bemoullische Gleichung verwiesen.

Ferner weist die vorschlagsgemäße Greifvorrichtung 1 eine Vakuum-Greifeinheit 9 auf. Diese umfasst eine Ansaugkammer 10. Mit der Ansaugkammer 10 ist in einem von der Ansaugkammer 10 begrenzten Bereich über der Werkstückoberfläche 5 - Vakuum-Unterdruck-Bereich 11 - ein statischer Unterdruck zum Halten des Werkstücks 4 erzeugbar. Vorzugsweise tritt beim Halten mit der Vakuum-Greifeinheit 9 in der Ansaugkammer 10 im Wesentlichen keine Strömung auf.

Bei der Verwendung des Begriffs "Vakuum" ist hier ein gegenüber dem Umgebungsdruck geringerer Druck gemeint. Dies gilt insbesondere in Zusammenhang mit den Begriffen "Vakuum-Greifeinheit", "Vakuum-Unterdruck-Bereich" und "Vakuum-Betriebsmodus".

Hier und vorzugsweise bildet beim Halten des Werkstücks 4 die Ansaugkammer 10 mit dem Werkstück 4 im Wesentlichen einen geschlossenen Raum. Hierdurch muss zum Aufnehmen eines Werkstücks 4 ein Unterdruck in der Ansaugkammer 10 aufgebaut werden, welcher dann zum Halten des Werkstücks 4 lediglich erhalten werden muss. Dies ermöglicht einen besonders niedrigen Energieverbrauch für das Halten des Werkstücks 4. Insofern ist der Bereich zwischen dem Werkstück 4 und der Greifvorrichtung 1 beim Halten des Werkstücks 4 mit der Vakuum-Greifeinheit 9 im Wesentlichen strömungsfrei. Bei dem Halten des Werkstücks 4 mit der Vakuum-Greifeinheit 9 stellt sich somit, wie vorstehend bereits erläutert wurde, im Wesentlichen ein statischer Druckzustand in der Greifvorrichtung 1, insbesondere in der Ansaugkammer 10, ein.

Im Gegensatz hierzu wird zum Halten des Werkstücks 4 mit der Bernoulli-Greifeinheit 6 durchgehend eine Strömung, zumindest in einem Teilbereich zwischen der Greifvorrichtung 1 und dem Werkstück 4, erzeugt.

Um eine besonders kompakte, das Werkstück 4 sicher haltende und flexibel einsetzbare Greifvorrichtung 1 zu schaffen, überschneiden sich der Bernoulli-Unterdruck-Bereich 8 und der Vakuum-Unterdruck-Bereich 11 zumindest teilweise, wie in der Zeichnung dargestellt. Alternativ und hier nicht dargestellt kann es auch vorgesehen sein, dass sich der Bernoulli-Unterdruck-Bereich 8 und der Vakuum-Unterdruck-Bereich 11 einander umgeben. In beiden Fällen kann die Greifvorrichtung 1 äußerst flexibel für unterschiedlich große Werkstücke 4 eingesetzt werden.

In dem in der Zeichnung gezeigten Ausführungsbeispiel ist der Bernoulli-Unterdruck-Bereich 8 vollständig im Vakuum-Unterdruck-Bereich 11 angeordnet. Alternativ kann aber auch vorgesehen sein, dass der Vakuum-Unterdruck-Bereich 11 vollständig im Bernoulli-Unterdruck-Bereich 8 angeordnet ist.

Für den Fall, dass der Bernoulli-Unterdruck-Bereich 8 und der Vakuum-Unterdruck-Bereich 11 sich einander umgeben, sind der Bernoulli-Unterdruck-Bereich 8 und der Vakuum-Unterdruck-Bereich 11 voneinander getrennt. Besonders bevorzugt grenzen der Bernoulli-Unterdruck-Bereich 8 und der Vakuum-Unterdruck-Bereich 11 in diesem Fall direkt aneinander an und werden insbesondere durch eine Barriere, beispielsweise durch ein elastisches Wandelement, voneinander getrennt.

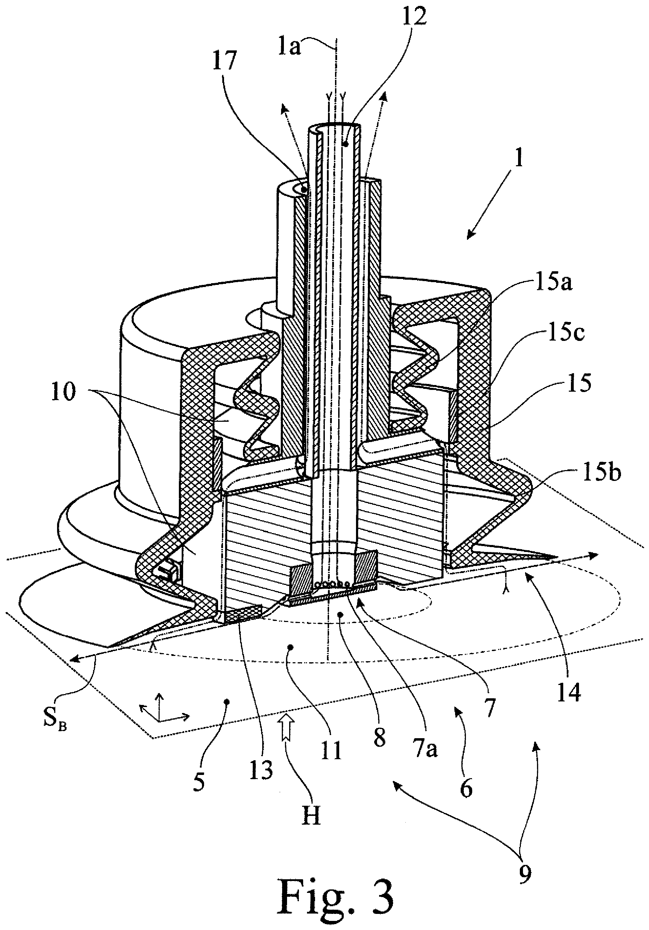

Wie in den Fig. 3 bis 5 gezeigt, ist die Bernoulli-Greifeinheit 6 zumindest zum Teil, hier und vorzugsweise vollständig, in der Vakuum-Greifeinheit 9 angeordnet. Die Bernoulli-Greifeinheit 6 kann dabei zumindest zum Teil, hier und vorzugsweise vollständig, in der Ansaugkammer 10 angeordnet sein. In einer alternativen Ausgestaltung kann es jedoch auch vorgesehen sein, dass die Vakuum-Greifeinheit 9 zumindest zum Teil, vorzugsweise vollständig, in der Bernoulli-Greifeinheit 6 angeordnet ist.

Die Bernoulli-Greifeinheit 6 ermöglicht grundsätzlich ein schwimmendes Halten des flächigen Werkstücks 4, so dass das Werkstück 4 relativ zu der Greifvorrichtung 1 entlang der Werkstückoberfläche 5, insbesondere nahezu reibungsfrei, verschiebbar ist. Die das Halten des Werkstücks 4 mit der Bernoulli-Greifeinheit 6 ermöglichende Strömung bildet dabei ein Luftkissen, auf dem das Werkstück 4 entsprechend verschiebbar ist.

Die Vakuum-Greifeinheit 9 erlaubt dagegen ein festes Halten des Werkstücks 4 ohne Bewegungsfreiheitsgrad des Werkstücks 4 entlang der Werkstückoberfläche 5. Das Werkstück 4 ist gegenüber der Vakuum-Greifeinheit 9 dabei nicht verlagerbar. Insofern lässt sich mit der Bernoulli-Greifeinheit 6 eine Art Gleitlager für das Werkstück 4 erzeugen, während sich mit der Vakuum-Greifeinheit 9 eine Art Festlager für das Werkstück 4 bilden lässt.

Vorzugsweise weist die Greifvorrichtung 1 einen Bemoulli-Betriebsmodus, in dem das Werkstück 4 von der Bernoulli-Greifeinheit 6 gehalten wird, und/oder einen Vakuum-Betriebsmodus, in dem das Werkstück 4 von der Vakuum-Greifeinheit 9 gehalten wird, auf. Zusätzlich oder alternativ kann die Greifvorrichtung 1 einen kombinierten Betriebsmodus aufweisen, in dem das Werkstück 4 von der Bernoulli-Greifeinheit 6 und von der Vakuum-Greifeinheit 9 gehalten wird. Weiter vorzugsweise ist es so, dass die Greifvorrichtung 1 das Werkstück 4 im Bemoulli-Betriebsmodus vornehmlich, insbesondere ausschließlich, durch die Bernoulli-Greifeinheit 6 bzw. im Vakuum-Betriebsmodus vornehmlich, insbesondere ausschließlich, durch die Vakuum-Greifeinheit 9 hält.

Eine strömungstechnisch besonders vorteilhafte und hier dargestellte Ausgestaltung betrifft eine bezogen auf eine Greifachse 1a im Wesentlichen rotationssymmetrische Ausgestaltung der Bernoulli-Greifeinheit 6 und/oder der Vakuum-Greifeinheit 9. Grundsätzlich kann von dieser Rotationssymmetrie aber auch abgewichen werden.

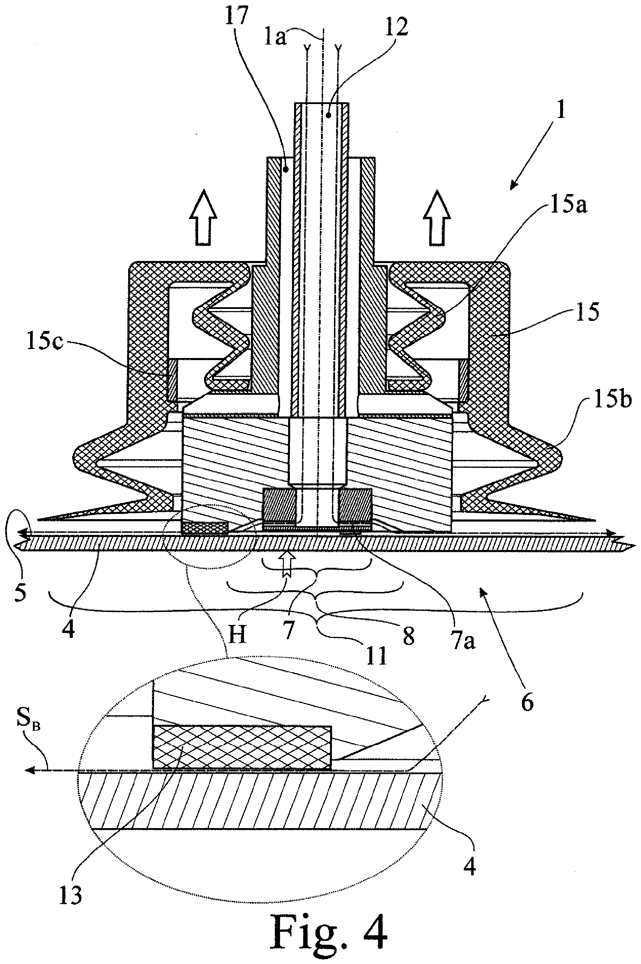

Die Bernoulli-Greifeinheit 6 weist eine Druckleitung 12 zum Anlegen der Druckluft an die Ausströmeinheit 7 auf. Wie in Fig. 4 gezeigt, strömt die Druckluft durch die Druckleitung 12 in die Ausströmeinheit 7 und wird von dieser bezogen auf die Greifachse 1a radial ausgeleitet. Hierzu weist die Ausströmeinheit 7 hier und vorzugsweise eine Vielzahl von Öffnungen 7a auf, welche um die Greifachse 1a verteilt sind. Vorzugsweise verlaufen die Mittelachsen der Öffnungen 7a im Wesentlichen parallel zur Werkstückoberfläche 5. Alternativ können diese jedoch auch in einem Winkel von bis zu 30° gegenüber der Werkstückoberfläche 5 geneigt sein. Wie in der Fig. 4 dargestellt, bildet sich hier und vorzugsweise zwischen der Werkstückoberfläche 5 und der Greifvorrichtung 1, hier der Bernoulli-Greifeinheit 6, ein Luftpolster aus, welches durch die Strömung gebildet wird, welche auch den Unterdruck zum Halten des Werkstücks 4 erzeugt. Das Werkstück 4 wird von der Bernoulli-Greifeinheit 6 wie oben angedeutet im Wesentlichen berührungsfrei gehalten.

Nur um sicherzustellen, dass zwischen der Werkstückoberfläche 5 und der Greifvorrichtung 1 im Bemoulli-Betriebsmodus stets ein Spalt verbleibt, weist die Bernoulli-Greifeinheit 6 eine Reihe von Abstützelementen 13 auf. Das Werkstück 4 kann damit im Bemoulli-Betriebsmodus sicher gehalten werden, auch wenn sich beispielsweise ungewünschte mechanische Schwingungen am Werkstück 4 ausbilden.

Die Vakuum-Greifeinheit 9 weist wie oben angesprochen die Ansaugkammer 10 auf. Die Ansaugkammer 10 mündet in eine Ansaugöffnung 14, welche im Vakuum-Betriebsmodus in Kontakt mit der Werkstückoberfläche 5 steht und den Vakuum-Unterdruck-Bereich 11 begrenzt. Die Haltekraft zum Halten des Werkstücks 4 wird durch das Anlegen eines Unterdrucks an die Ansaugkammer 10 erzeugt. Hierzu kann diese über eine Unterdruckleitung 17 an eine Unterdruckquelle, insbesondere eine Unterdruckpumpe, angeschlossen werden. Die Funktion der Unterdruckquelle kann auch von einer Venturi-Anordnung übernommen werden, sofern lediglich ein Druckluftanschluss vorliegt.

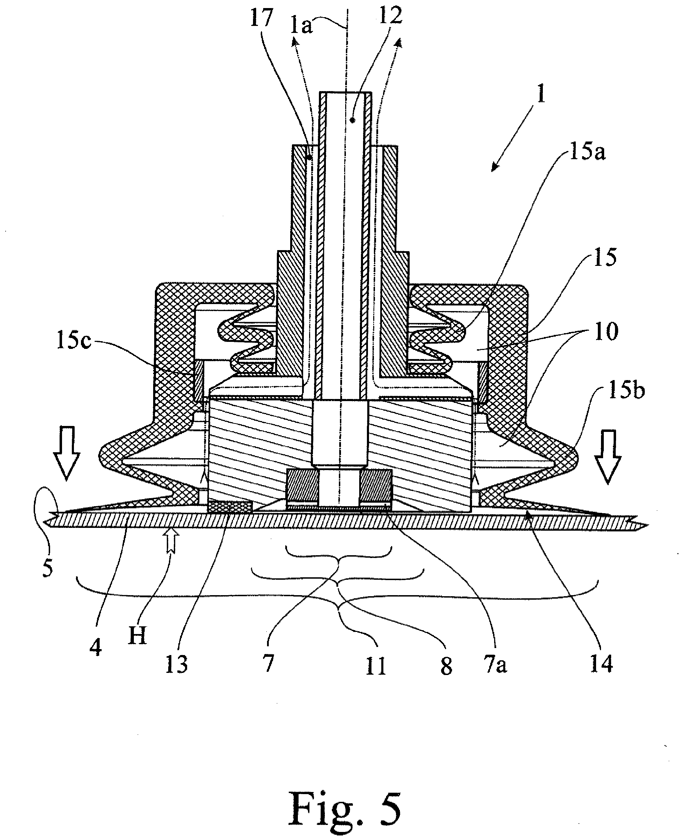

Die Ansaugkammer 10 wird durch einen Balgsaugkörper 15, vorzugsweise einen Faltenbalgsaugkörper, gebildet. Im Balgsaugkörper 15 ist hier und vorzugsweise ein Verstärkungselement 15c, insbesondere aus Kunststoff und/oder Metall angeordnet. Wie in Fig. 5 gezeigt, ist dieser Balgsaugkörper 15 an der Greifvorrichtung 1 im Übrigen, insbesondere über einen eigenen Federabschnitt 15a, federnd gelagert. Darüber hinaus weist der Balgsaugkörper 15 einen Federabschnitt 15b im Bereich der Ansaugöffnung 14 zum federnden Anlegen an das Werkstück 4 auf.

Der Balgsaugkörper 15 kann einteilig, insbesondere einstückig, wie in den Fig. 3 bis 5 gezeigt, ausgebildet sein. Grundsätzlich ist auch eine mehrteilige Ausgestaltung möglich. Der Balgsaugkörper 15 kann insbesondere zwei oder drei Balgsaugkörperteile aufweisen, die sich ggf. in ihren Materialeigenschaften unterscheiden.

Wie in Fig. 1 zu sehen ist, sind hier in der Ansaugöffnung 14 Stützabschnitte 16 zum Abstützen und Anlegen an das Werkstück 4 vorgesehen. Diese sind weiter vorzugsweise am Balgsaugkörper 15 ausgebildet. Damit wird ein stabiles Abstützen der Werkstückoberfläche 5 im Vakuum-Betriebsmodus erreicht.

Ferner weist die Vakuum-Greifeinheit 9 eine Unterdruckleitung 17 zum Anlegen eines Unterdrucks in der Ansaugkammer 10 auf. Hier verlaufen die Mittelachsen der Unterdruckleitung 17 und der Druckleitung 12 zumindest abschnittsweise koaxial zueinander. Besonders bevorzugt ist es, wenn die Unterdruckleitung 17 in der Druckleitung 12 aufgenommen ist, und/oder, wenn die Druckleitung 12 in der Unterdruckleitung 17 aufgenommen ist, wie dies im Ausführungsbeispiel gezeigt ist. Eine solche Ausbildung ermöglicht einen ganz besonders einfachen Anschluss der Greifvorrichtung 1 an einen Endeffektor 2. Alternativ können die Druckleitung 12 und die Unterdruckleitung 17 jedoch auch separat voneinander ausgebildet sein.

Hier und vorzugsweise ist die Greifvorrichtung 1 als eine vormontierte Einheit ausgebildet, welche als Einheit an einen Endeffektor 2 montierbar ist. In dem Fall, dass die Unterdruckleitung 17 in der Druckleitung 12 bzw. die Druckleitung 12 in der Unterdruckleitung 17 aufgenommen ist, ist eine solche Montage besonders einfach durch eine Schraubverbindung möglich. Vorzugsweise wird die Greifvorrichtung 1 kraft- und/oder formschlüssig mit dem Endeffektor 2 verbunden, so dass ein einfacher Austausch einer defekten Greifvorrichtung 1 möglich ist.

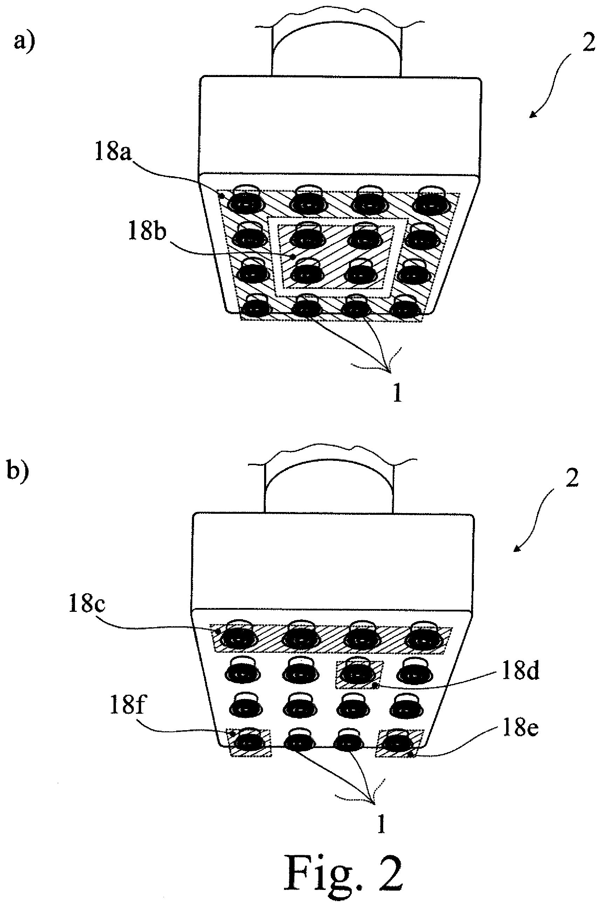

Wie in den Fig. 1 und 2 gezeigt, ist an einem vorschlagsgemäßen Endeffektor 2 für einen Manipulator 3 mindestens eine vorschlagsgemäße Greifvorrichtung 1 vorgesehen. Vorzugsweise weist der Endeffektor 2 mindestens zwei Greifvorrichtungen 1 auf, wobei mindestens eine Greifvorrichtung 1 oder nur ein Teil der Greifvorrichtungen 1 vorschlagsgemäß ausgestaltet ist oder wobei, wie im Ausführungsbeispiel, alle Greifvorrichtungen 1 vorschlagsgemäß ausgebildet sind.

Die hier und vorzugsweise mehreren Greifvorrichtungen 1 bilden zusammen einen Greifbereich aus, über den die jeweilige Haltekraft auf die Werkstückoberfläche 5 übertragbar ist. Je nach Ansteuerung der Greifvorrichtungen 1 lassen sich unterschiedliche Greifbereiche aus einzelnen Teilgreifbereichen 18a-f realisieren. Beispielhaft sind in den Fig. 2a und 2b die unterschiedlichen Greifbereiche durch schraffierte Flächen angedeutet. Fig. 2a zeigt die Möglichkeit der Realisierung eines äußeren Teilgreifbereichs 18a und eines inneren Teilgreifbereichs 18b. Fig. 2b zeigt, dass die dortigen Teilgreifbereiche 18c, 18d, 18e, 18f bis zu einem gewissen Grad individuell auf den jeweiligen Anwendungsfall angepasst werden können, indem die Greifeinrichtungen 1 entsprechend angesteuert werden.

Der Manipulator 3, insbesondere der Endeffektor 2, weist hier und vorzugsweise eine schaltbare Ventilvorrichtung 19 für die Ansteuerung der Greifeinrichtungen, also für den Anschluss der Greifvorrichtung 1 bzw. einer der Greifvorrichtungen 1 an eine Versorgungsquelle 20, auf. Vorzugsweise weist die Ventilvorrichtung 19 mehrere Ventile auf. Der Ventilvorrichtung 19 ist eine entsprechende elektronische Steuerung 21 zugeordnet.

Vorzugsweise wird bzw. werden bei einem Aufnehmen und/oder Ablegen eines Werkstücks 4 die Greifvorrichtung 1 bzw. Greifvorrichtungen 1 im Vakuum-Betriebsmodus betrieben. Zwischen dem Aufnehmen und dem Ablegen kann bzw. können zum Positionieren des Werkstücks 4 relativ zum Endeffektor 2 und/oder zum Formen des Werkstücks 4 am Endeffektor 2 eine Greifvorrichtung 1 oder mehrere Greifvorrichtungen 1 in den Bemoulli-Betriebsmodus umgeschaltet werden. Vorzugsweise verbleiben dabei ein und/oder zwei Greifvorrichtungen 1 im Vakuum-Betriebsmodus, es können jedoch auch alle Greifvorrichtungen 1 umgeschaltet werden.

Schließlich kann beim Ablegen zum Lösen des Werkstücks 4 vom Endeffektor 2 ein Druckluftimpuls über die Bemoulli-Greifeinheiten erzeugt werden.

## Patentansprüche

1. Greifvorrichtung für einen Endeffektor (2) eines Manipulators (3) zum Halten eines Werkstücks (4) über seine Werkstückoberfläche (5),
mit einer Bernoulli-Greifeinheit (6), mit einer Ausströmeinheit (7) zum Ausleiten einer Strömung (S_{B}) aus der Bernoulli-Greifeinheit (6) zwischen Greifvorrichtung (1) und Werkstückoberfläche (5) in der Art, dass durch die Strömung (S_{B}) in einem begrenzten Bereich - Bernoulli-Unterdruck-Bereich (8) - ein statischer Unterdruck zum Halten des Werkstücks (4) erzeugbar ist,
und mit einer Vakuum-Greifeinheit (9) mit einer Ansaugkammer (10), wobei in einem von der Ansaugkammer (10) begrenzten Bereich - Vakuum-Unterdruck-Bereich (11) - ein statischer Unterdruck zum Halten des Werkstücks (4) erzeugbar ist, wobei die Ansaugkammer (10) durch einen Balgsaugkörper (15) gebildet wird,
wobei sich der Bernoulli-Unterdruck-Bereich (8) und der Vakuum-Unterdruck-Bereich (11) zumindest teilweise überschneiden oder wobei sich der Bernoulli-Unterdruck-Bereich (8) und der Vakuum-Unterdruck-Bereich (11) einander umgeben,
wobei die Vakuum-Greifeinheit (9) eine Unterdruckleitung (17) zum Anlegen eines Unterdrucks (17) an die Ansaugkammer (10) aufweist, und, dass die Bernoulli-Greifeinheit (6) eine Druckleitung (12) zum Anlegen der Druckluft an die Ausströmeinheit (7) aufweist und dass die Mittelachsen der Unterdruckleitung (17) und der Druckleitung (12) zumindest abschnittsweise koaxial verlaufen.

2. Greifvorrichtung nach Anspruch 1, **dadurch gekennzeichnet, dass** der Bernoulli-Unterdruck-Bereich (8) vollständig im Vakuum-Unterdruck-Bereich (11) angeordnet ist, und/oder, dass der Vakuum-Unterdruck-Bereich (11) vollständig im Bernoulli-Unterdruck-Bereich (8) angeordnet ist.

3. Greifvorrichtung nach Anspruch 1 oder 2, **dadurch gekennzeichnet, dass** die Bernoulli-Greifeinheit (6) zumindest zum Teil, vorzugsweise vollständig, in der Vakuum-Greifeinheit (9) angeordnet ist, vorzugsweise, dass die Bernoulli-Greifeinheit (6) zumindest zum Teil, vorzugsweise vollständig, in der Ansaugkammer (10) angeordnet ist.

4. Greifvorrichtung nach einem der vorhergehenden Ansprüche, **dadurch gekennzeichnet, dass** die Bernoulli-Greifeinheit (6) ein schwimmendes Halten des Werkstücks (4) mit einem Bewegungs-Freiheitsgrad des Werkstücks (4) entlang der Werkstückfläche erlaubt, und/oder, dass die Vakuum-Greifeinheit (9) ein festes Halten des Werkstücks (4) ohne Bewegungs-Freiheitsgrad des Werkstücks (4) entlang der Werkstückfläche erlaubt.

5. Greifvorrichtung nach einem der vorhergehenden Ansprüche, **dadurch gekennzeichnet, dass** die Greifvorrichtung (1) einen Bemoulli-Betriebsmodus aufweist, in dem das Werkstück (4) von der Bernoulli-Greifeinheit (6) gehalten wird, und/oder, dass die Greifvorrichtung (1) einen Vakuum-Betriebsmodus aufweist, in dem das Werkstück (4) von der Vakuum-Greifeinheit (9) gehalten wird, und/oder, dass die Greifvorrichtung (1) einen kombinierten Betriebsmodus aufweist, in dem das Werkstück (4) von der Bernoulli-Greifeinheit (6) und von der Vakuum-Greifeinheit (9) gehalten wird.

6. Greifvorrichtung nach einem der vorhergehenden Ansprüche, **dadurch gekennzeichnet, dass** die Ansaugkammer (10) in eine Ansaugöffnung (14) mündet, welche den Vakuum-Unterdruck-Bereich (11) bereitstellt.

7. Greifvorrichtung nach einem der vorhergehenden Ansprüche, **dadurch gekennzeichnet, dass** die Ansaugkammer (10) durch einen Faltenbalgsaugkörper gebildet wird.

8. Greifvorrichtung nach einem der vorhergehenden Ansprüche, **dadurch gekennzeichnet, dass** der Balgsaugkörper (15) an der Greifvorrichtung (1) im Übrigen (6), insbesondere über einen eigenen Federabschnitt (15a) federnd, gelagert ist und/oder dass der Balgsaugkörper (15) einen Federabschnitt (15b) im Bereich der Ansaugöffnung (14) zum federnden Anlegen an das Werkstück (4) aufweist.

9. Greifvorrichtung nach einem der vorhergehenden Ansprüche, **dadurch gekennzeichnet, dass** die Unterdruckleitung (17) in der Druckleitung (12) aufgenommen und/oder dass die Druckleitung (12) in der Unterdruckleitung (17) aufgenommen ist.

10. Greifvorrichtung nach einem der vorhergehenden Ansprüche, **dadurch gekennzeichnet, dass** die Greifvorrichtung (1) eine vormontierte Einheit ausbildet und als Einheit an einem Endeffektor (2) montierbar ist.

11. Endeffektor für einen Manipulator (3) mit mindestens einer Greifvorrichtung (1) nach einem der vorhergehenden Ansprüche.

12. Endeffektor nach Anspruch 11 **dadurch gekennzeichnet, dass** mindestens zwei Greifvorrichtungen (1) vorgesehen sind und dass nur ein Teil der Greifvorrichtungen (1) nach einem der Ansprüche 1 bis 10 ausgestaltet sind, oder, dass alle Greifvorrichtungen (1) nach einem der Ansprüche 1 bis 10 ausgebildet sind.

13. Endeffektor nach Anspruch 11 oder 12, **dadurch gekennzeichnet, dass** zumindest in einem äußeren Bereich der Gesamt-Greiffläche (18), insbesondere in einem Eckbereich der Gesamt-Greiffläche (18), vorzugsweise in mindestens zwei Eckbereichen der Gesamt-Greiffläche (18), eine Greifvorrichtung (1) nach einem der Ansprüche 1 bis 10 angeordnet ist.

14. Manipulator, insbesondere Roboter, mit mindestens drei Achsen, mit einem Endeffektor (2) nach einem der Ansprüche 11 bis 13.

15. Manipulator nach Anspruch 14, **dadurch gekennzeichnet, dass** der Manipulator (3) eine schaltbare Ventilvorrichtung (19) zum insbesondere pneumatischen Anschluss der Greifvorrichtung (1) bzw. mindestens einer der Greifvorrichtungen (1) an eine insbesondere pneumatische Versorgungsquelle (20), insbesondere an eine Druckquelle und/oder eine Unterdruckquelle, aufweist, vorzugsweise, dass mehrere Greifvorrichtungen (1) mittels der Ventilvorrichtung (19) in einer Gruppe an die Versorgungsquelle (20) anschließbar sind.

## Claims

1. Gripping apparatus for an end effector (2) of a manipulator (3) for holding a workpiece (4) via its workpiece surface (5),
having a Bernoulli gripping unit (6) with an outflow unit (7) for discharging a flow (S_{B}) from the Bernoulli gripping unit (6) between gripping apparatus (1) and workpiece surface (5) in such a way that, in a delimited region (Bernoulli negative-pressure region (8)), a static negative pressure for holding the workpiece (4) is able to be generated by the flow (S_{B}),
and having a vacuum gripping unit (9) with a suction chamber (10), wherein, in a region delimited by the suction chamber (10) (vacuum negative-pressure region (11)), a static negative pressure for holding the workpiece (4) is able to be generated, wherein the suction chamber (10) is formed by a bellows-type suction body (15),
wherein the Bernoulli negative-pressure region (8) and the vacuum negative-pressure region (11) at least partially overlap, or wherein the Bernoulli negative-pressure region (8) and the vacuum negative-pressure region (11) surround one another,
wherein the vacuum gripping unit (9) has a negative-pressure line (17) for applying a negative pressure to the suction chamber (10), and the Bernoulli gripping unit (6) has a pressure line (12) for applying the compressed air to the outflow unit (7), and the centre axes of the negative-pressure line (17) and the pressure line (12) at least sectionally extend in a coaxial manner.

2. Gripping apparatus according to Claim 1, **characterized in that** the Bernoulli negative-pressure region (8) is arranged completely in the vacuum negative-pressure region (11), and/or **in that** the vacuum negative-pressure region (11) is arranged completely in the Bernoulli negative-pressure region (8).

3. Gripping apparatus according to Claim 1 or 2, **characterized in that** the Bernoulli gripping unit (6) is arranged at least partially, preferably completely, in the vacuum gripping unit (9), preferably **in that** the Bernoulli gripping unit (6) is arranged at least partially, preferably completely, in the suction chamber (10) .

4. Gripping apparatus according to one of the preceding claims, **characterized in that** the Bernoulli gripping unit (6) allows the workpiece (4) to be held in a floating manner with a degree of freedom of movement of the workpiece (4) along the workpiece surface, and/or **in that** the vacuum gripping unit (9) allows the workpiece (4) to be held in a fixed manner without a degree of freedom of movement of the workpiece (4) along the workpiece surface.

5. Gripping apparatus according to one of the preceding claims, **characterized in that** the gripping apparatus (1) has a Bernoulli operating mode, in which the workpiece (4) is held by the Bernoulli gripping unit (6), and/or in that the gripping apparatus (1) has a vacuum operating mode, in which the workpiece (4) is held by the vacuum gripping unit (9), and/or **in that** the gripping apparatus (1) has a combined operating mode, in which the workpiece (4) is held by the Bernoulli gripping unit (6) and by the vacuum gripping unit (9).

6. Gripping apparatus according to one of the preceding claims, **characterized in that** the suction chamber (10) opens out into a suction opening (14), which provides the vacuum negative-pressure region (11).

7. Gripping apparatus according to one of the preceding claims, **characterized in that** the suction chamber (10) is formed by a corrugated-bellows-type suction body.

8. Gripping apparatus according to one of the preceding claims, **characterized in that** the bellows-type suction body (15) is, in addition (6), mounted on the gripping apparatus (1) in a resilient manner, in particular via a separate spring portion (15a), and/or **in that** the bellows-type suction body (15) has a spring portion (15b) in the region of the suction opening (14) for resilient abutment against the workpiece (4).

9. Gripping apparatus according to one of the preceding claims, **characterized in that** the negative-pressure line (17) is accommodated in the pressure line (12), and/or in that the pressure line (12) is accommodated in the negative-pressure line (17).

10. Gripping apparatus according to one of the preceding claims, **characterized in that** the gripping apparatus (1) forms a pre-assembled unit and is able to be mounted as a unit on an end effector (2).

11. End effector for a manipulator (3), having at least one gripping apparatus (1) according to one of the preceding claims.

12. End effector according to Claim 11, **characterized in that** at least two gripping apparatuses (1) are provided, and **in that** only a proportion of the gripping apparatuses (1) are designed according to one of Claims 1 to 10, or **in that** all the gripping apparatuses (1) are designed according to one of Claims 1 to 10.

13. End effector according to Claim 11 or 12, **characterized in that** a gripping apparatus (1) according to one of Claims 1 to 10 is arranged at least in an outer region of the entire gripping surface (18), in particular in a corner region of the entire gripping surface (18), preferably in at least two corner regions of the entire gripping surface (18).

14. Manipulator, in particular robot, with at least three axes, having an end effector (2) according to one of Claims 11 to 13.

15. Manipulator according to Claim 14, **characterized in that** the manipulator (3) has a switchable valve apparatus (19) for in particular pneumatic connection of the gripping apparatus (1) or of at least one of the gripping apparatuses (1) to an in particular pneumatic supply source (20), in particular to a pressure source and/or to a negative-pressure source, preferably **in that** multiple gripping apparatuses (1) are able to be connected to the supply source (20) in a group by means of the valve apparatus (19).

## Revendications

1. Dispositif de préhension pour un effecteur d'extrémité (2) d'un manipulateur (3) pour maintenir une pièce (4) par l'intermédiaire de sa surface de pièce (5), avec une unité de préhension de Bernoulli (6), avec une unité de sortie (7) pour évacuer un flux (S_{B}) de l'unité de préhension de Bernoulli (6) entre le dispositif de préhension (1) et la surface de pièce (5) de telle manière que le flux (S_{B}) permet de générer dans une zone limitée - zone de dépression de Bernoulli (8) - une dépression statique pour maintenir la pièce (4),
et avec une unité de préhension par le vide (9) avec une chambre d'aspiration (10), une dépression statique pour maintenir la pièce (4) pouvant être générée dans une zone limitée par la chambre d'aspiration (10) - zone de dépression par le vide (11), la chambre d'aspiration (10) étant formée par un corps d'aspiration à soufflet (15), la zone de dépression de Bernoulli (8) et la zone de dépression par le vide (11) se recoupant au moins partiellement ou la zone de dépression de Bernoulli (8) et la zone de dépression par le vide (11) s'entourant mutuellement,
l'unité de préhension par le vide (9) présentant une conduite de dépression (17) pour appliquer une dépression (17) à la chambre d'aspiration (10), et l'unité de préhension de Bernoulli (6) présentant une conduite de pression (12) pour appliquer l'air comprimé à l'unité de sortie (7) et les axes centraux de la conduite de dépression (17) et de la conduite de pression (12) étant coaxiaux au moins par sections.

2. Dispositif de préhension selon la revendication 1, **caractérisé en ce que** la zone de dépression de Bernoulli (8) est entièrement agencée dans la zone de dépression par le vide (11), et/ou **en ce que** la zone de dépression par le vide (11) est entièrement agencée dans la zone de dépression de Bernoulli (8).

3. Dispositif de préhension selon la revendication 1 ou 2, **caractérisé en ce que** l'unité de préhension de Bernoulli (6) est agencée au moins partiellement, de préférence entièrement, dans l'unité de préhension par le vide (9), de préférence **en ce que** l'unité de préhension de Bernoulli (6) est agencée au moins partiellement, de préférence entièrement, dans la chambre d'aspiration (10) .

4. Dispositif de préhension selon l'une quelconque des revendications précédentes, **caractérisé en ce que** l'unité de préhension de Bernoulli (6) permet un maintien flottant de la pièce (4) avec un degré de liberté de mouvement de la pièce (4) le long de la surface de pièce, et/ou **en ce que** l'unité de préhension par le vide (9) permet un maintien fixe de la pièce (4) sans degré de liberté de mouvement de la pièce (4) le long de la surface de pièce.

5. Dispositif de préhension selon l'une quelconque des revendications précédentes, **caractérisé en ce que** le dispositif de préhension (1) présente un mode fonctionnement de Bernoulli, dans lequel la pièce (4) est maintenue par l'unité de préhension de Bernoulli (6), et/ou **en ce que** le dispositif de préhension (1) présente un mode fonctionnement par le vide, dans lequel la pièce (4) est maintenue par l'unité de préhension par le vide (9), et/ou **en ce que** le dispositif de préhension (1) présente un mode fonctionnement combiné dans lequel la pièce (4) est maintenue par l'unité de préhension de Bernoulli (6) et par l'unité de préhension par le vide (9) .

6. Dispositif de préhension selon l'une quelconque des revendications précédentes, **caractérisé en ce que** la chambre d'aspiration (10) débouche dans une ouverture d'aspiration (14) qui fournit la zone de dépression par le vide (11).

7. Dispositif de préhension selon l'une quelconque des revendications précédentes, **caractérisé en ce que** la chambre d'aspiration (10) est formée par un corps d'aspiration à soufflet plissé.

8. Dispositif de préhension selon l'une quelconque des revendications précédentes, **caractérisé en ce que** le corps d'aspiration à soufflet (15) est pour le reste (6) monté de manière élastique sur le dispositif de préhension (1), notamment par une section élastique (15a) propre, et/ou **en ce que** le corps d'aspiration à soufflet (15) présente une section élastique (15b) dans la zone de l'ouverture d'aspiration (14) pour s'appliquer de manière élastique contre la pièce (4).

9. Dispositif de préhension selon l'une quelconque des revendications précédentes, **caractérisé en ce que** la conduite de dépression (17) est logée dans la conduite de pression (12) et/ou **en ce que** la conduite de pression (12) est logée dans la conduite de dépression (17).

10. Dispositif de préhension selon l'une quelconque des revendications précédentes, **caractérisé en ce que** le dispositif de préhension (1) forme une unité préassemblée et peut être monté en tant qu'unité sur un effecteur d'extrémité (2).

11. Effecteur d'extrémité pour un manipulateur (3) avec au moins un dispositif de préhension (1) selon l'une quelconque des revendications précédentes.

12. Effecteur d'extrémité selon la revendication 11, **caractérisé en ce qu'**au moins deux dispositifs de préhension (1) sont prévus et **en ce que** seule une partie des dispositifs de préhension (1) est réalisée selon l'une quelconque des revendications 1 à 10, ou **en ce que** tous les dispositifs de préhension (1) sont réalisées selon l'une quelconque des revendications 1 à 10.

13. Effecteur d'extrémité selon la revendication 11 ou 12, **caractérisé en ce qu'**un dispositif de préhension (1) selon l'une quelconque des revendications 1 à 10 est agencé au moins dans une zone extérieure de la surface de préhension totale (18), notamment dans une zone de coin de la surface de préhension totale (18), de préférence dans au moins deux zones de coin de la surface de préhension totale (18).

14. Manipulateur, notamment robot, avec au moins trois axes, avec un effecteur d'extrémité (2) selon l'une quelconque des revendications 11 à 13.

15. Manipulateur selon la revendication 14, **caractérisé en ce que** le manipulateur (3) présente un dispositif de soupape commutable (19) pour le raccordement, notamment pneumatique, du dispositif de préhension (1) ou d'au moins l'un des dispositifs de préhension (1) à une source d'alimentation (20) notamment pneumatique, notamment à une source de pression et/ou à une source de dépression, de préférence **en ce que** plusieurs dispositifs de préhension (1) peuvent être raccordés en un groupe à la source d'alimentation (20) au moyen du dispositif de soupape (19).
